# EUROPEAN PATENT APPLICATION

(11) **EP 4 553 633 A1**
(43) Date of publication of application: **14.05.2025**
(21) Application number: 23857522.9
(22) Date of filing: 28.06.2023
(51) Int. Cl.: G06F 3/04842, G06F 3/0481, H04W 4/80, G06T 19/00, G06T 19/20, G06F 3/14, G06F 3/04815, G06T 13/40, G06F 3/01

(54) **METHOD AND DEVICE FOR DISPLAYING INFORMATION IN VIRTUAL SPACE**

(30) Priority: 26.08.2022 KR 20220107760; 16.09.2022 KR 20220117217
(71) Applicant: Samsung Electronics Co., Ltd., Suwon-si, Gyeonggi-do 16677 (KR)
(72) Inventor: KIM, Taeyeong, Suwon-si, Gyeonggi-do 16677 (KR); KIM, Moonjeong, Suwon-si, Gyeonggi-do 16677 (KR); KIM, Youngrog, Suwon-si, Gyeonggi-do 16677 (KR); SUNG, Wonkyu, Suwon-si, Gyeonggi-do 16677 (KR); SONG, Taeyang, Suwon-si, Gyeonggi-do 16677 (KR); YOO, Jonghyuck, Suwon-si, Gyeonggi-do 16677 (KR); LEE, Changhan, Suwon-si, Gyeonggi-do 16677 (KR); PARK, Jihea, Suwon-si, Gyeonggi-do 16677 (KR); HONG, Hyunju, Suwon-si, Gyeonggi-do 16677 (KR)
(74) Representative: Appleyard Lees IP LLP
(86) International application number: PCT/KR2023/009032
(87) International publication number: WO 2024/043484

(57) **Abstract**

A method for displaying, in a virtual space, pieces of information received from at least one electronic device comprises operations of: receiving at least one of state information of each of at least one electronic device, pieces of sensor data obtained from the at least one electronic device, message information, call information, and outdoor space information; on the basis of a user input, determining a time which comprises at least one of a first time point that is a reference time point, a second time point before the reference time point, and a third time point after the reference time point; and virtualizing and outputting, to a virtual space, at least one of the state information, the message information, the call information, an avatar, indoor space information, and the outdoor space information, which correspond to the determined time

## Description

### TECHNICAL FIELD

Various embodiments of the present disclosure relates to a method and device for displaying information in a virtual space.

### BACKGROUND ART

Along the development of Internet of Things (IoT) technology, various types of electronic devices are connected through networks, and users may check state information of the electronic devices or control the electronic devices using terminals connected through IoT networks. IoT service providers provide users with applications capable of checking and controlling the states of various types of electronic devices. With the application, not only weather information but also indoor space information may be obtained using sensor data collected through the electronic devices.

In this way, there is an advantage in that various types of information may be viewed through the terminals based on IoT electronic devices. Therefore, there is a growing interest in user experience and user interface that may provide various types of information to users so that the users may easily understand the information and control electronic devices.

### BRIEF DESCRIPTION OF DRAWINGS

FIG. 1 is a diagram illustrating a method of displaying pieces of outdoor space information corresponding to time in a virtual space according to an embodiment.
FIG. 2 is a diagram illustrating a method of displaying pieces of state information corresponding to time in a virtual space according to an embodiment.
FIG. 3 is a diagram illustrating a method of displaying message information in a virtual space according to an embodiment.
FIG. 4 is a diagram illustrating a method of displaying schedule information in a virtual space according to an embodiment.
FIG. 5 is a diagram illustrating an avatar according to an embodiment.
FIG. 6 is a diagram illustrating a screen on which a plurality of pieces of information is listed two-dimensionally and a screen on which the plurality of pieces of information is displayed in a three-dimensional virtual space according to an embodiment.
FIG. 7 is a diagram illustrating a method of controlling an electronic device in a virtual space according to an embodiment.
FIG. 8 is a flowchart illustrating a method of displaying a virtual space according to an embodiment.
FIG. 9 is a block diagram of an electronic device in a network environment according to various embodiments.

### BEST MODE FOR CARRYING OUT THE INVENTION

The following structural or functional descriptions of embodiments disclosed in the present disclosure are merely intended for the purpose of describing the embodiments and the embodiments may be implemented in various forms. The embodiments are not meant to be limited, but it is intended that various modifications, equivalents, and alternatives are also covered within the scope of the claims.

Terms, such as first, second, and the like, may be used herein to describe components. Each of these terminologies is not used to define an essence, order or sequence of a corresponding component but used merely to distinguish the corresponding component from other component(s). For example, a first component may be referred to as a second component, or similarly, the second component may be referred to as the first component.

It should be noted that when it is described that one component is "connected", "coupled", or "joined" to another component, a third component may be "connected", "coupled", and "joined" between the first and second components, although the first component may be directly connected, coupled, or joined to the second component. On the contrary, it should be noted that when it is described that one component is "directly connected", "directly coupled", or "directly joined" to another component, a third component may be absent. Expressions describing a relationship between components, for example, "between", directly between", or "directly neighboring", etc., should be interpreted to be alike.

The singular forms "a", "an", and "the" are intended to include the plural forms as well, unless the context clearly indicates otherwise. It should be further understood that the terms "comprises" and/or "comprising," when used in this specification, specify the presence of stated features, integers, steps, operations, elements, components or a combination thereof, but do not preclude the presence or addition of one or more other features, integers, steps, operations, elements, components, and/or groups thereof.

Unless otherwise defined, all terms, including technical and scientific terms, used herein have the same meaning as commonly understood by one of ordinary skill in the art to which this disclosure pertains. Terms, such as those defined in commonly used dictionaries, should be construed to have meanings matching with contextual meanings in the relevant art, and are not to be construed to have an ideal or excessively formal meaning unless otherwise defined herein.

The electronic device according to embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic device is not limited to those described above.

Hereinafter, embodiments will be described in detail with reference to the accompanying drawings. In the drawings, like reference numerals are used for like elements.

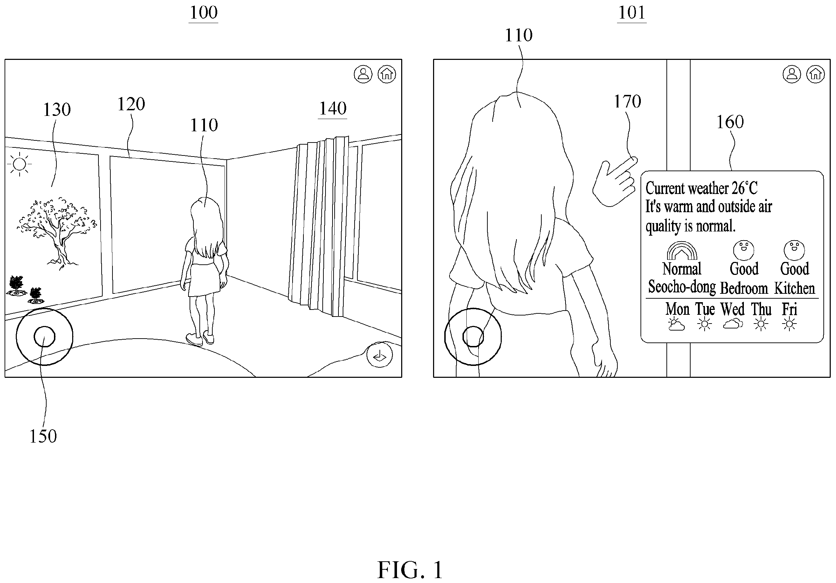

FIG. 1 is a diagram illustrating a method of displaying pieces of outdoor space information corresponding to time in a virtual space according to an embodiment.

Using the Internet of Things (IoT) technology, a user may view state information, sensor data, outdoor space information, and the like of electronic devices connected to a network through a screen of a terminal. The user may also control the electronic devices connected to the IOT network using the terminal. However, as the number of electronic devices connected to the IoT network increases, it may be difficult to check the state information of the electronic devices at a glance on the screen of the terminal.

Therefore, information obtained from electronic devices connected to the IoT network and pieces of outdoor space information may be displayed in a virtual indoor space and a virtual outdoor space, so that the user may check the state of the electronic devices visualized through the virtual space, the state of the indoor space, and the state of the outdoor space at a glance.

Hereinafter, a method of displaying various pieces of information in a virtual space will be described.

FIG. 1 shows a screen 100 on which an outdoor space is implemented based on outdoor space information, a screen 101 on which the outdoor space information is displayed, an avatar 110, a window 120, an outdoor space 130, an indoor space 140, an avatar manipulation device 150, outdoor space information 160, and a user input 170.

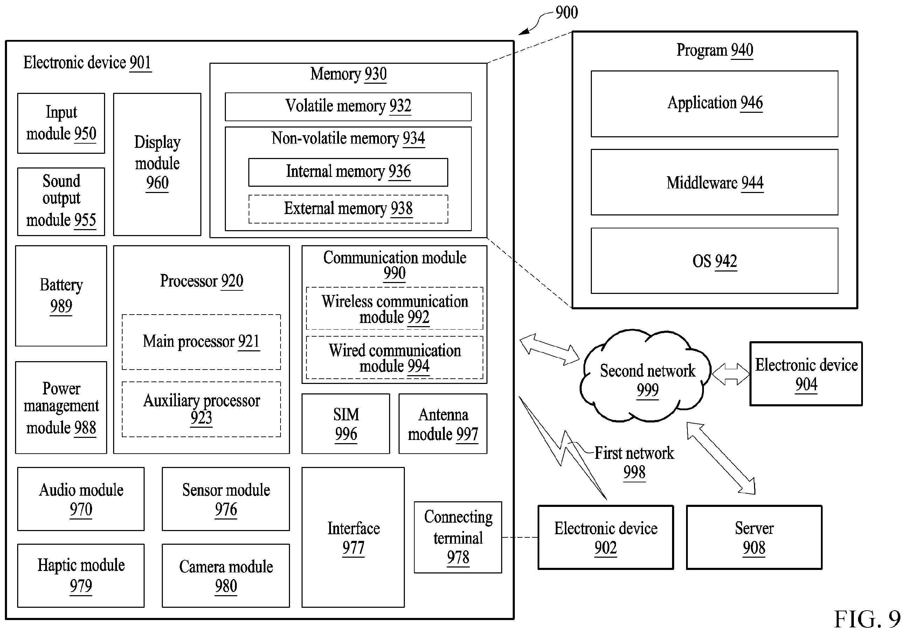

A processor 920 to be described below (e.g., a processor 920 of FIG. 9) may be a processor of a server or a processor of a terminal, and various embodiments of the present disclosure are not limited thereto.

The processor 920 according to an embodiment may receive at least one of pieces of state information of a plurality of respective electronic devices, pieces of sensor data obtained from the plurality of electronic devices, message information, call information, or outdoor space information.

The state information of the electronic device (hereinafter, referred to as the state information) may refer to all information related to the state of the electronic device. The state information may include at least one of an operating state, an operating mode, power usage, or position information of the electronic device. The operating state may refer to information about whether the electronic device is operating. The operating mode may refer to one of a plurality of modes in which the electronic device is operatable when powered on. the power usage may refer to the power consumed by the electronic device for a predetermined period of time. The position information may refer to a position of the electronic device in an indoor space.

The pieces of sensor data obtained from the plurality of electronic devices may refer to data obtained using sensors attached to the electronic devices. For example, the sensor data may include a temperature, humidity, a sound, brightness, and air quality measurement data.

The message information may refer to information related to a message received by the electronic device (e.g., a terminal). The message information may be information required to display the message received by the electronic device in a virtual space.

The call information may refer to information related to a call received or made by the electronic device (e.g., a terminal). For example, when there is a missed call, information related to the missed call included in the call information may be displayed in the virtual space.

The outdoor space information may include information about an outdoor space that is distinguished from an indoor space in the real world. The outdoor space information may include at least one of an outdoor temperature, an indoor-outdoor temperature difference, a sensible temperature, an outdoor fine dust concentration, outdoor humidity, precipitation, rainfall, fog, an atmospheric pressure, wind information, visibility, or cloud information. The processor 920 may receive the outdoor space information and display the outdoor space information in the virtual space.

The processor 920 according to an embodiment may determine time based on a user input. The time may include at least one of a first time point which is a reference time point, a second time point before the reference time point, or a third time point after the reference time point. The reference time point may refer to the current time. Therefore, the second time point may be a past time point, and the third time point may be a future time point. When the user selects a desired time point, the processor 920 may generate a virtual space corresponding to the corresponding time point. When the user selects the first time point, the user may view the current virtual space, and when the user selects the second time point, the user may view the past virtual space. When the third time point is selected, the user may view the future virtual space based on data analysis.

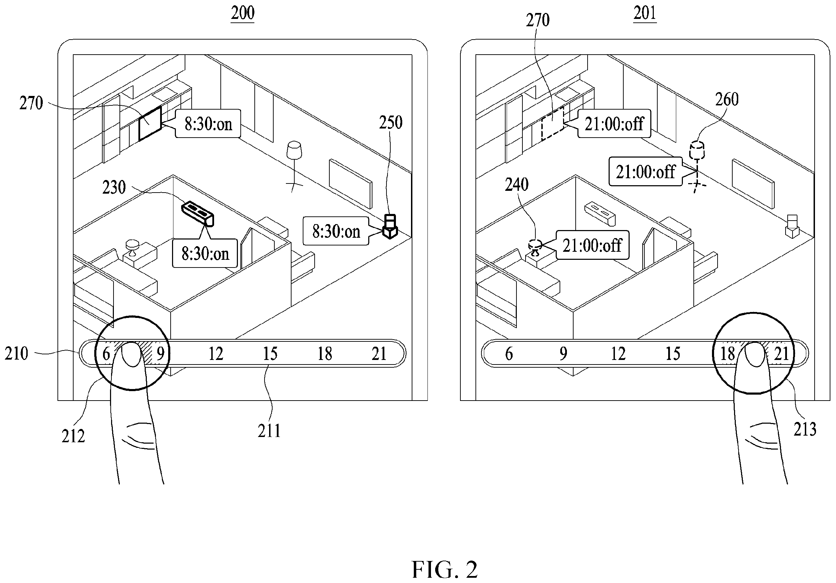

Referring to FIG. 2, a reference time point 211 may be 15 o'clock. A second time point 212 that is in the past from the reference time point 211 may be 8:30. **In** addition, a third time point 213 that is in the future from the reference time point 211 may be 21:00.

The processor 920 according to an embodiment may visualize and output, to a virtual space, at least one of the state information, the message information, the call information, the avatar, the indoor space information, or the outdoor space information, which correspond to the determined time.

The avatar may be a three-dimensional (3D) model displayed in the virtual space. The avatar is used to display that the user is in the indoor space, and may be displayed in the virtual space to reflect a state of the user. The avatar may be determined based on at least one of the state information of the user or biometric information of the user.

The state information of the user may include information related to a current state of the user. For example, the state information of the user may include at least one of an exercise state, a sleeping state, a study state, a work state, or rest state of the user.

The biometric information of the user may be sensor data obtained from the electronic device (e.g., a wearable device). For example, the biometric information of the user may include at least one of a heart rate, oxygen saturation, a body temperature, electrocardiogram, blood sugar, or brain waves.

The indoor space information may include information about an indoor space in the real world. The indoor may refer to inside a building, and the outdoor may refer to outside a building. The indoor space information may be obtained from sensor data. The processor 920 according to an embodiment may generate the indoor space information based on the sensor data. The indoor space information may include at least one of an indoor temperature, an indoor-outdoor temperature difference, an indoor fine dust concentration, or indoor humidity. The indoor temperature, the indoor fine dust concentration, and the indoor humidity may be measured by sensors attached to the electronic devices present in the indoor space. Since the indoor-outdoor temperature difference may be determined based on the indoor temperature and the outdoor temperature, the processor 920 may calculate the indoor-outdoor temperature difference using the outdoor space information.

Some pieces of the data collected by the processor 920 according to an embodiment may be collected only when an event occurs, and some pieces of data may be automatically collected at regular intervals.

The processor 920 according to an embodiment may update at least one of the message information, the call information, the user state information, or the state information based on whether an event occurs. When an event such as sending or receiving a message or making or receiving a call occurs, the processor 920 may update the message information or the call information. When an event in which the user changes the state occurs, the processor 920 may update the user state information. For example, the user may change the state from a sleeping state to an active state. In this case, the user state information may be updated. When an event in which the state of the electronic device is changed occurs, the processor 920 may update the state information of the electronic device. For example, when the electronic device is in operation and then stops operating, or when the operating mode of the electronic device is changed, the processor 920 may update the state information of the electronic device.

The processor 920 according to an embodiment may update at least one of the biometric information of the user, the indoor space information, or the outdoor space information at predetermined intervals. The processor 920 according to an embodiment may update the biometric information of the user, the indoor space information, or the outdoor space information at the same intervals or at different intervals. For example, the biometric information of the user may be updated every hour, the indoor space information may be updated every 30 minutes, and the outdoor space information may be updated in real time. The foregoing is merely an example and various embodiments of the present disclosure are not limited thereto.

The processor 920 according to an embodiment may generate an outdoor space 130 that is distinguished from the indoor space based on the outdoor space information. The processor 920 according to an embodiment may display the generated outdoor space 130 in the virtual space. As shown in FIG. 1, the outdoor space 130 visualized outside the window 120 may be displayed in the virtual space. For example, when the weather condition is sunny, the sunny weather may be visualized in the outdoor space 130. In another example, when it is raining, a scene of rain may be visualized in the outdoor space 130. Through this, the user may get the weather through the visualized outdoor space outside the window of the virtual space. Therefore, the processor 920 may visualize the outdoor space 130 thereby obtaining the effect as if the user gets the weather through the window in the real world.

The processor 920 according to an embodiment may display outdoor space information corresponding to various time points in the virtual space. For example, the processor 920 may display past outdoor space information, current outdoor space information, or future outdoor space information in the virtual space. The processor 920 according to an embodiment may visualize and display outdoor space information corresponding to at least one of the first time point, the second time point, or the third time point based on the user input, based on an point of view of the avatar. The point of view of the avatar may be a point of view determined based on a direction viewed by the avatar. Therefore, the virtual space may be displayed from the point of view of the avatar, and accordingly, the outdoor space may also change according to the point of view of the avatar. The processor 920 according to an embodiment may generate the outdoor space 130 based on the outdoor space information corresponding to at least one of the first time point, the second time point, or the third time point based on the user input. For example, the outdoor space information corresponding to the first time point may be the current outdoor space information. When it is clear currently and the current time is 1:00 P.M., the processor 920 may generate the outdoor space 130 with sunny and clear weather conditions. For example, the outdoor space information corresponding to the second time point may be past outdoor space information. When the current time is 1:00 P.M., the second time point is 6:00 A.M., and it is clear, the processor 920 may generate the outdoor space 130 in which the sun is rising. Since the second time point is a past time point, the processor 920 may generate the outdoor space 130 using the past outdoor space information. In another example, the outdoor space information corresponding to the third time point may be future outdoor space information. The future outdoor space information may include a weather forecast. When the current time is 1:00 P.M., the third time point is 8:00 P.M., and it is rainy, the processor 920 may generate the outdoor space 130 with dark and rainy weather conditions. Through this, since the user may view the outdoor space 130 corresponding to each time point in the virtual reality, the user may check the past, current, and future outdoor situations at a glance through the virtual space.

The user input according to an embodiment may include at least one of an input of selecting a window which is a boundary between an outdoor space and an indoor space in a virtual space, or an input of manipulating an avatar to position the avatar within a predetermined distance from a window. The user may find it difficult to determine weather information from only the outdoor space 130 and may wish to know more detailed weather information. In this case, not only the outdoor space 130 but also the outdoor space information needs to be displayed in the virtual space. Accordingly, the processor 920 may display the outdoor space information in the virtual space based on the user input. The screen 101 displaying the outdoor space information may be a virtual space where the outdoor space information is displayed to allow the user to know the detailed weather information. When the input of selecting the window 120 is received, the processor 920 may display the outdoor space information 160 in the virtual space. When the avatar 110 is positioned within a predetermined distance from the window 120 according to another embodiment, the processor 920 may display the outdoor space information 160 in the virtual space. The user may move the avatar 110 in the virtual space using the avatar manipulation device 150. When the user wishes to see the outdoor space information, the user may move the avatar 110 closer to the window 120. When the avatar 110 is positioned near the window 120, the processor 920 may display the outdoor space information 160 in the virtual space.

FIG. 2 is a diagram illustrating a method of displaying pieces of state information corresponding to time in a virtual space according to an embodiment.

FIG. 2 shows a virtual space 200 of a second time point, a virtual space 201 of a third time point, a time point selection object 210, a first time point 211, the second time point 212, the third time point 213, a first electronic device 230, a second electronic device 250, a third electronic device 270, a fourth electronic device 240, and a fifth electronic device 260.

The processor 920 according to an embodiment may visualize and output pieces of state information corresponding to determined time in a virtual space. Referring to FIG. 2, the virtual space 200 of the second time point may be visualized. The second time point is a past time point, and when the first time point 211 is, for example, 15:00, the second time point 212 may be 8:30 A.M. The processor 920 may determine the second time point 212 as 8:30 A.M. based on the user input. For example, when the first electronic device 230, the second electronic device 250, and the third electronic device 270 are all operating at the second time point 212, the state information may be displayed as "on" as shown in FIG. 2. Therefore, the user may check the past states of electronic devices at a glance through the state information of the electronic devices displayed in the virtual space.

When the determined time is the third time point, the processor 920 according to an embodiment may determine at least one of pieces of state information or an avatar corresponding to the third time point based on the user pattern information. The user pattern information may include pattern information generated as a result of analyzing activities of the user in an indoor space. The user pattern information may include at least one of electronic device usage pattern of the user or activity pattern information of the user.

The pieces of state information corresponding to the third time point according to an embodiment may be determined based on the electronic device usage pattern information of the user included in the user pattern information. The electronic device usage pattern information of the user may include information related to a pattern of a user using an electronic device. For example, the electronic device usage pattern information of the user may include a pattern of operating a washing machine once a week, a pattern of operating an air conditioner only when the user stay indoors, a pattern of operating a robot cleaner for one hour a day, a pattern of turning lights off after 11 P.M., and the like. Referring to FIG. 2, the electronic device usage pattern information may include a pattern of air purifier operation time that is 8:00 A.M. to 20:00 P.M. In this case, the processor 920 may predict the state of the air purifier not operating at 21:00, which is the third time point 213, and display the state in the virtual space. In another example, when the washing machine starts at 15:00 and a washing mode is a 2-hour course, the processor 920 may ascertain that the washing machine ends at 17:00. Therefore, the processor 920 may display the state information of the washing machine corresponding to the third time point as OFF in the virtual space.

The processor 920 according to an embodiment may display state information of the third electronic device 270, the fourth electronic device 240, and the fifth electronic device 260 corresponding to the third time point 213 in the virtual space. For example, when the first time point 211 is 15:00 and the third time point 213 is 21:00, the processor 920 may display, in the virtual space, that the third electronic device 270, the fourth electronic device 240, and the fifth electronic device 260 are all in the OFF state based on the electronic device usage pattern information.

The avatar corresponding to the third time point according to an embodiment may be determined based on the activity pattern information of the user included in the user pattern information. The activity pattern information of the user may include patterns related to the activities of the user in the indoor space. For example, the activity pattern information of the user may include a pattern of the user lying in bed after 11 P.M., a pattern of the user staying in a living room between 8 P.M. and 10 P.M., a pattern of the user staying in a kitchen between 7 P.M. and 8 P.M., and the like. For example, when the user has a pattern of staying in the living room between 8 P.M. and 10 P.M. and the third time point 231 is 21:00, the processor 920 may display the avatar in the living room. In another example, when the user has a pattern of lying in bed after 11 P.M. and the third time point 231 is 23:00, the processor 920 may display the avatar on the bed.

When the determined time is the third time point, the processor 920 according to an embodiment may determine the indoor space information or the outdoor space information corresponding to the third time point. The processor 920 according to an embodiment may predict the indoor space information corresponding to the third time point based on the sensor data of the indoor space. The processor 920 may ascertain a change pattern of the indoor space information using the sensor data, and ascertain future indoor space information based on the change pattern. Also, the processor 920 may also predict the outdoor space information corresponding to the third time point using the weather forecast.

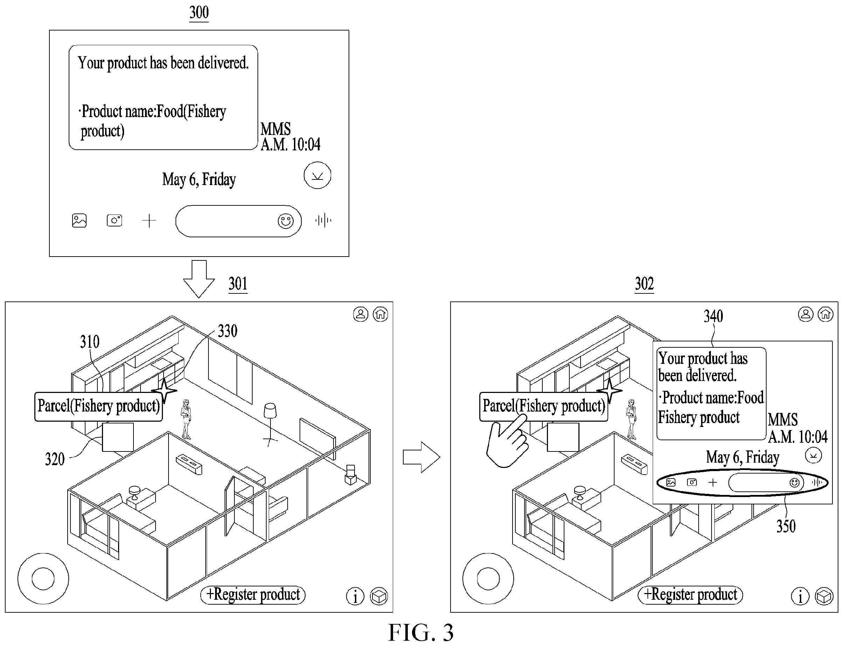

FIG. 3 is a diagram illustrating a method of displaying message information in a virtual space according to an embodiment.

FIG. 3 shows message information 300, message notification 301 in a virtual space, detailed message information 302 in a virtual space, first text information 310, an object 320, a visual effect 330, second text information 340, and a text input window 350.

When a message is received, an electronic device (e.g., a terminal) according to an embodiment may display the received message in a virtual space. However, displaying the entire message content may be an inefficient use of a virtual space. Therefore, it may be efficient to display only a portion of the message content in the virtual space. Furthermore, when the processor 920 analyzes the message content and displays the visualized content in the virtual space, the user may find the message content only from the content displayed in the virtual space even without reading the message. In addition, it is advantageous that the user is able to see the message content in the virtual space even when a messaging application is not executed.

The processor 920 according to an embodiment may visualize and display, in the virtual space, the object 320 corresponding to message information and the first text information 310 including at least a portion of the message information. The message information may include at least one of parcel information, financial transaction information, or advertisement information.

The object 320 corresponding to the message information according to an embodiment may be a 3D object in the form of a graphic that may display message information in a simplified manner. The processor 920 may match an object corresponding to the message information in advance. For example, when the message information is the parcel information, the object may be a parcel box. The processor 920 according to another embodiment may also receive a matching relationship between the object and the message information selected by the user. Referring to FIG. 3, the object 320 matched with the message information 300 may be a fishery product object.

The first text information 310 according to an embodiment may include at least a portion of the message information. For example, the first text information 310 may include a keyword of the message information. Referring to FIG. 3, the message information 300 includes the content that a parcel of the fishery product has arrived. In this case, the first text information 310 may be determined as a parcel (the fishery product). The parcel information may include information notifying that the parcel has arrived. The financial transaction information may include information in the form of a message related to a financial transaction of the user. For example, the financial transaction information may include deposits and withdrawals, a credit card usage history, and the like. The advertisement information may include advertisements received via messages.

Based on a comparison between the message information and a predetermined event list, when a content included in the message information is an event included in the predetermined event list, the processor 920 according to an embodiment may display a visual effect corresponding to the event on an object corresponding to the event. The predetermined event list may be a list for determining whether to apply a visual effect to the object corresponding to the message information. Therefore, there may be a case where the event extracted by analyzing the message information 300 by the processor 920 is included in the predetermined event list. In this case, there may also be a visual effect corresponding to the event. The visual effect may include, for example, at least one of object glint, object blink, object transparency control, object brightness control, or object highlight. Referring to FIG. 3, the processor 920 may apply the visual effect 330 to an upper right end of the object 320 to provide a notification to the user.

When a user input of the object corresponding to the event is received, the processor 920 according to an embodiment may visualize and display the second text information 340 of the message information in the virtual space. Referring to FIG. 3, the processor 920 may receive the user input for the object 320. In this case, the processor 920 may display the second text information 340 in the virtual space. The second text information may be information including more detailed information compared to the first text information. The second text information may include all text information. This may allow the user to view the entire message content directly in the virtual space, and the processor 920 may not need to execute a separate messaging application. Referring to FIG. 3, the user may also input a message through the text input window 350 in the virtual space. Therefore, the user may not need to execute a separate messaging application to reply to the message.

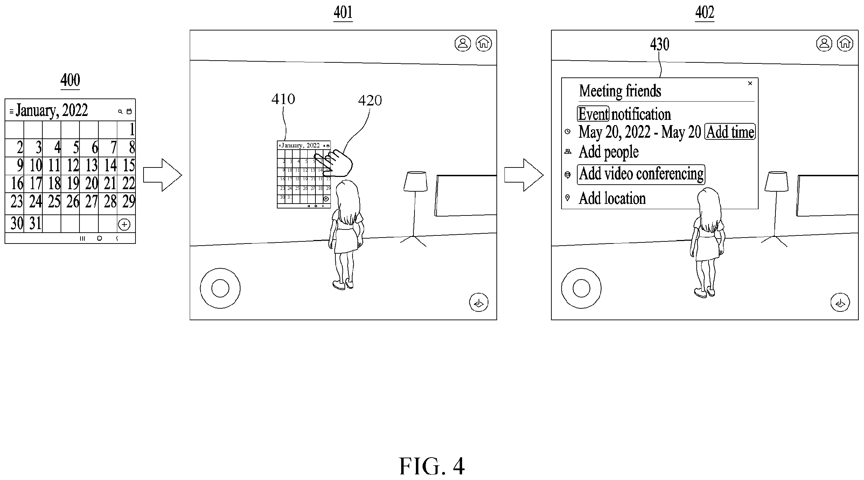

FIG. 4 is a diagram illustrating a method of displaying schedule information in a virtual space according to an embodiment.

FIG. 4 shows a calendar 400, a virtual space 401 displaying a calendar, a schedule input 402 in a virtual space, a calendar displaying object 410, a user input 420, and a schedule input object 430.

The processor 920 according to an embodiment may display the schedule information on the calendar displayed in the virtual space based on the schedule information. Referring to FIG. 4, the schedule information may be reflected in the calendar 400. The processor 920 may display the schedule information on the calendar displaying object 410 in the virtual space.

When the processor 920 according to an embodiment receives the user input 420, the virtual space may be changed by the schedule input 402 in the virtual space. For example, when the user selects January 11 to add a schedule on January 11, the processor 920 may display the schedule input object 430 corresponding to January 11 in the virtual space.

This may allow the user to check the schedule information in the virtual space without executing a separate calendar application. In addition, the user may add the schedule information in the virtual space without executing the calendar application.

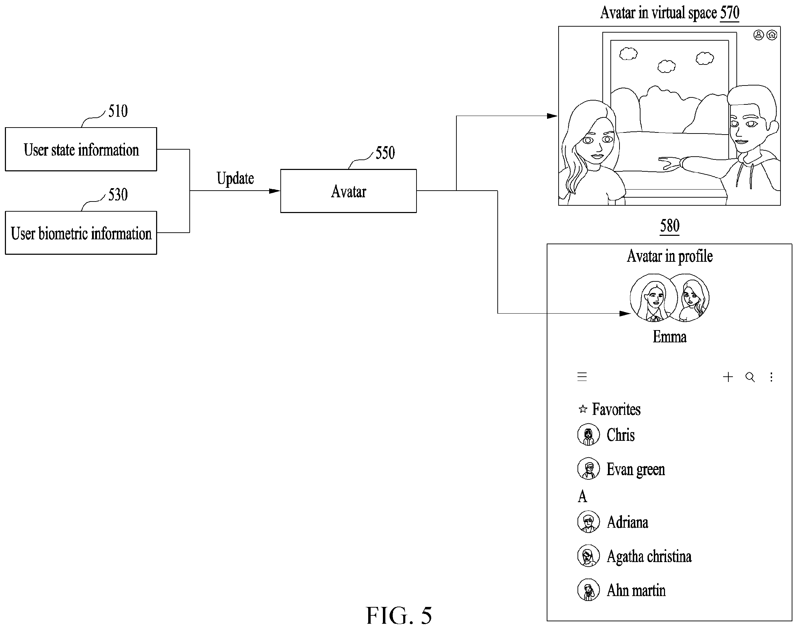

FIG. 5 is a diagram illustrating an avatar according to an embodiment.

An avatar 550 may be a 3D model displayed in a virtual space. The avatar 550 is used to indicate that the user is in an indoor space, and may be displayed in the virtual space reflecting the state of a user. The avatar 550 may be determined based on at least one of user state information 510 or user biometric information 530. The user state information 510 and the user biometric information 530 have been described above in detail with reference to FIG. 1, and therefore, the detailed description thereof is omitted with reference to this drawing.

The processor 920 according to an embodiment may update the avatar 550 based on at least one of the user state information 510 or the user biometric information 530. For example, when the user state information 510 indicates a sleeping state, the processor 920 may generate the avatar 550 in a sleeping state. For example, when the user state information 510 indicates an exercise state and the user biometric information 530 is 160 bpm (heart rate), the processor 920 may generate an avatar in intense exercise state. In another example, when the user lacks sleep than usual, the processor 920 may generate an avatar in a tired state.

The processor 920 according to an embodiment may display the updated avatar 550 as an avatar 570 in the virtual space. As shown in FIG. 5, in a case of talking to others in a chat room, the avatars of participants in the chat room may be displayed. The avatars may reflect the states of the participants in the chat room.

The processor 920 according to an embodiment may display the updated avatar 550 as an avatar 580 in a profile. This may notify the state of the user to other users through the avatar. In addition, the user may also find the states of other users through the avatars of other accounts displayed in a list of friends.

Through this, the user may find the visualized state of the user through the avatar displayed in the virtual space. Furthermore, the user may also find the states of other users through the avatars.

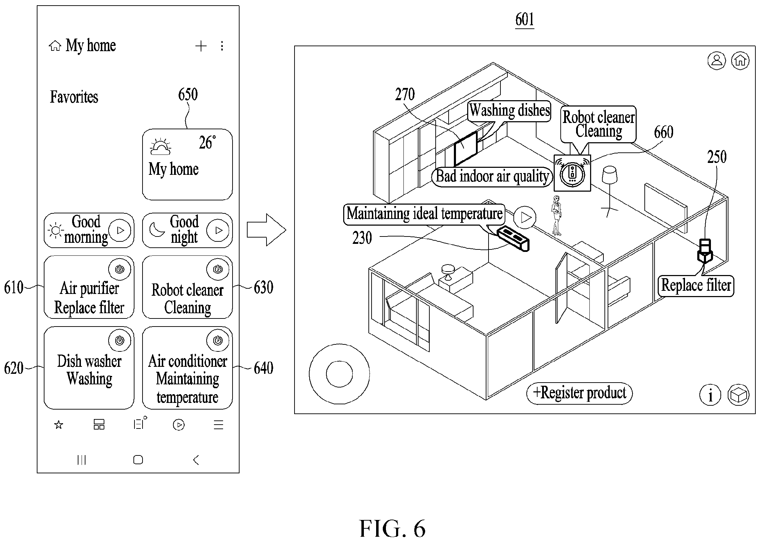

FIG. 6 is a diagram illustrating a screen on which a plurality of pieces of information is listed two-dimensionally and a screen on which the plurality of pieces of information is displayed in a 3D virtual space according to an embodiment.

The processor 920 according to an embodiment may display electronic devices in a virtual space based on position information of the electronic devices. Through this, even when there are a plurality of identical electronic devices, the electronic devices are displayed at different positions in the virtual space if the positions thereof are different. Thus, the user may easily distinguish the identical electronic devices in the virtual space. However, when the electronic devices are displayed in a list format two-dimensionally as shown in a screen 600 of FIG. 6, it may be difficult for the user to distinguish between the identical electronic devices.

In FIG. 6, the screen 600 displays a list of electronic devices and state information of each electronic device. The screen 600 may be a screen on which a plurality of pieces of information is listed two-dimensionally. For example, the screen 600 may display air purifier: replace filter 610, dishwasher: cleaning 620, robot cleaner: cleaning 630, and air conditioner: maintaining temperature 640. However, when the state information of each electronic device is displayed in a list format, it may be difficult for the user to understand the state information of the electronic devices at a glance. Moreover, as the number of electronic devices increases, it may become more difficult for the user to understand state information.

A screen 601 of FIG. 6 shows the first electronic device 230, the second electronic device 250, the third electronic device 270, and a fourth electronic device 660. For example, the first electronic device 230 may be an air conditioner. The processor 920 may display the state information of the air conditioner positioned in a room as "maintaining ideal temperature" as shown on the screen 601. In another example, the second electronic device 250 may be an air purifier. The processor 920 may display the state information of the air purifier positioned in the living room as "replace filter" as shown on the screen 601. Therefore, the user may recognize at a glance that the air purifier positioned in the living room needs filter replacement. In another example, the third electronic device 270 may be a dishwasher. The processor 920 may display the state information of the dishwasher positioned in the kitchen as "washing" as shown on the screen 601. In another example, the fourth electronic device 660 may be a robot cleaner. The processor 920 may display the state information of the robot cleaner cleaning in the living room as "cleaning" as shown on the screen 601.

The processor 920 according to an embodiment may display sensor data received from electronic devices in the virtual space. For example, the processor 920 may display an indoor fine dust concentration received from the air purifier in the virtual space.

Therefore, since the state information or pieces of sensor data of the electronic device is displayed in the virtual space by reflecting the actual position of the electronic device, the user may check the state information or sensor data immediately through the virtual space without finding the electronic device to be used. It also prevents confusion even when there are a plurality of identical electronic products.

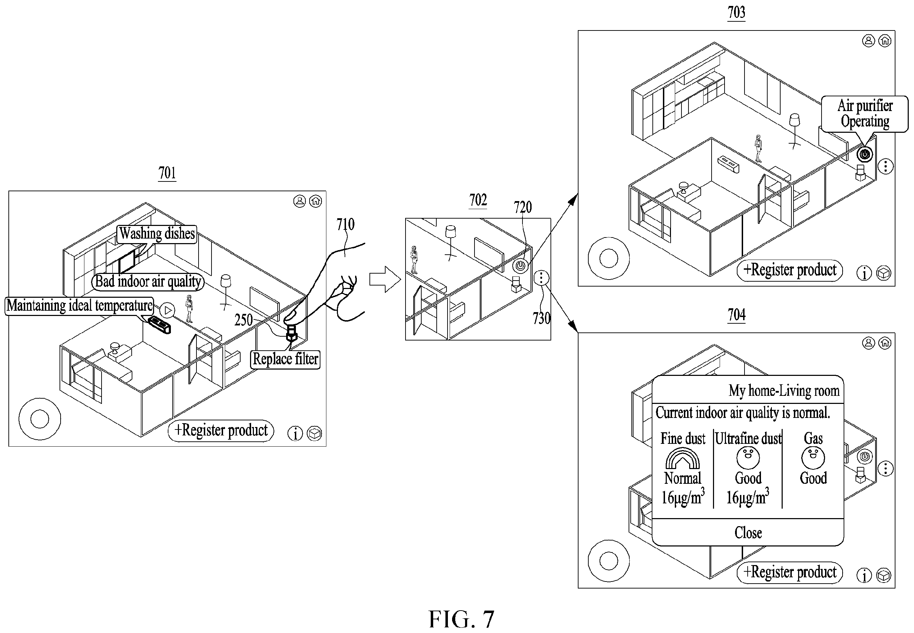

FIG. 7 is a diagram illustrating a method of controlling an electronic device in a virtual space according to an embodiment.

The processor 920 according to an embodiment may control at least one of a plurality of electronic devices displayed in a virtual space based on a user input.

As shown on a screen 701, the processor 920 may receive a user input 710 for the second electronic device 250 from the user. In this case, the processor 920 may provide the user with options necessary for controlling the second electronic device 250. As shown on a screen 702, the processor 920 may display a power object 720 and a detailed information object 730 of the second electronic device 250. The power object 720 may be an object that controls the power of an electronic device. The detailed information object 730 may be an object that provides an option to select at least one of viewing state information of an electronic device, viewing sensor data obtained from an electronic device, or controlling an operating mode of an electronic device.

When a user input of the power object 720 is received, the processor 920 according to an embodiment may operate the second electronic device 250 as shown on a screen 703.

When the processor 920 according to an embodiment receives a user input of the detailed information object 730, as shown on a screen 704, a function of viewing sensor data obtained from an electronic device may be executed so that the sensor data collected from the second electronic device may be displayed. Referring to FIG. 7, when the second electronic device 250 is an air purifier, the sensor data may be the indoor fine dust concentration. Therefore, information about indoor air quality may be displayed on the screen 704. The screen 704 is merely an example and the present disclosure is not limited thereto.

Therefore, the user may view the state information of electronic devices and control the electronic devices in the virtual space without using a remote control corresponding to each electronic device. As the number of electronic devices connected to the IoT network increases, it may be confusing and difficult for the user to control the electronic devices by listing the electronic devices on a single screen. Therefore, it may be much more intuitive and easier for the user to control electronic devices displayed in the virtual space based on the positions thereof.

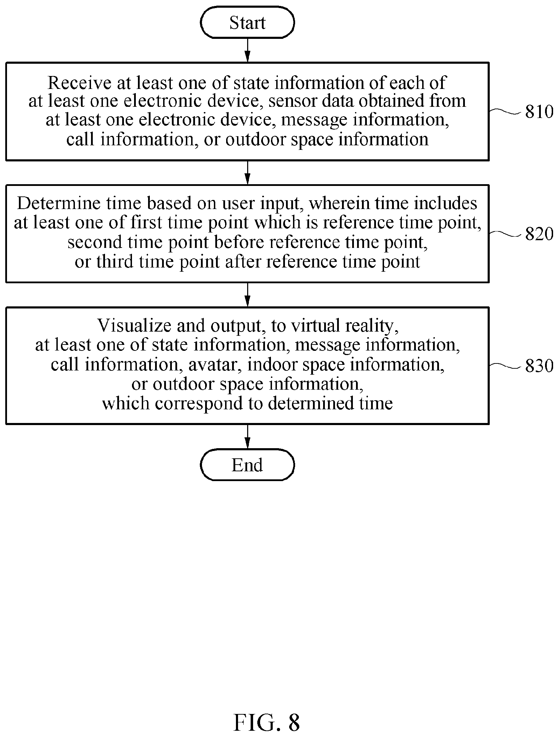

FIG. 8 is a flowchart illustrating a method of displaying a virtual space according to an embodiment.

In operation 810, an electronic device 901 (e.g., the electronic device 901 of FIG. 9) according to an embodiment may receive at least one of state information of each of at least one electronic device, sensor data obtained from the at least one electronic device, the message information 300, call information, or the outdoor space information 160.

In operation 820, the electronic device 901 according to an embodiment may determine time based on a user input, wherein the time includes at least one of the first time point 211 which is a reference time point, the second time point 212 before the reference time point, or the third time point 213 after the reference time point.

In operation 830, the electronic device 901 according to an embodiment may visualize and output, to a virtual space, at least one of the state information, the message information 300, the call information, an avatar (110 of FIG. 1; or 550 of FIG. 5), indoor space information, or the outdoor space information 160, which correspond to the determined time.

The electronic device 901 according to an embodiment may update at least one of the message information 300, the call information, the user state information 510, or the state information based on whether an event has occurred.

The electronic device 901 according to an embodiment may update at least one of the user biometric information 530, the indoor space information, or the outdoor space information 160 at predetermined intervals.

The electronic device 901 according to an embodiment may visualize and display, in the virtual space, the object 320 corresponding to the message information 300 including at least one of parcel information, financial transaction information, or advertisement information, and the first text information 310 including at least a partial content of the message information.

The electronic device 901 according to an embodiment may, based on a comparison between the message information 300 and a predetermined event list, when a content included in the message information is an event included in the predetermined event list, display a visual effect 330 corresponding to the event on an object corresponding to the event.

The electronic device 901 according to an embodiment may, when a user input of the object 320 corresponding to the event is received, visualize and display, in the virtual space, the second text information 340 of the message information 300.

The electronic device 901 according to an embodiment may generate the outdoor space 130 that is distinguished from an indoor space based on the outdoor space information 160.

The electronic device 901 according to an embodiment may display the generated outdoor space 130 in the virtual space.

The electronic device 901 according to an embodiment may visualize and display, based on a point of view of the avatar, the outdoor space information 160 corresponding to at least one of the first time point 211, the second time point 212, or the third time point 213 based on the user input.

The electronic device 901 according to an embodiment may generate the outdoor space 130 based on the outdoor space information 160.

The user input according to an embodiment may include at least one of an input of selecting the window 120 which is a boundary between an outdoor space and an indoor space in the virtual space, or an input of manipulating the avatar (110 of FIG. 1; or 550 of FIG. 5) to position the avatar within a predetermined distance from the window 120.

The electronic device 901 according to an embodiment may, when the determined time is the third time point 213, determine at least one of the state information or the avatar corresponding to the third time point 213 based on user pattern information.

The state information corresponding to the third time point may be determined based on user pattern information of the electronic device of a user included in the user pattern information.

The avatar corresponding to the third time point may be determined based on activity pattern information of the user included in the user pattern information.

The electronic device 901 according to an embodiment may display schedule information on a calendar displayed in the virtual space based on the schedule information.

The avatar (110 of FIG. 1; or 550 of FIG. 5) may be generated in the virtual space based on at least one of the user state information 510 or the user biometric information 530.

The state information of each of the plurality of electronic devices may include at least one of an operating state, an operation mode, power usage, or position information of each of the plurality of electronic devices.

The indoor space information may include at least one of the indoor temperature, an indoor-outdoor temperature difference, an indoor fine dust concentration, or indoor humidity.

The outdoor space information 160 may include at least one of an outdoor temperature, the indoor-outdoor temperature difference, a sensible temperature, an outdoor fine dust concentration, outdoor humidity, precipitation, rainfall, fog, an atmospheric pressure, wind information, visibility, or cloud information.

The electronic device 901 according to an embodiment may, based on a user input among a plurality of electronic devices displayed in the virtual space, control at least one of the plurality of electronic devices.

A server according to another embodiment for displaying pieces of information received from a plurality of electronic devices in a virtual space may receive at least one of state information of the plurality of electronic devices, pieces of sensor data obtained from the plurality of electronic devices, the message information 300, call information, or the outdoor space information 160.

The server may determine time based on a user input, wherein the time includes at least one of the first time point 211 which is a reference time point, the second time point 212 before the reference time point, or the third time point 213 after the reference time point.

The server may visualize and output, to the virtual space, at least one of the state information, the message information 300, the call information, an avatar (110 of FIG. 1; or 550 of FIG. 5), indoor space information, or the outdoor space information 160, which correspond to the determined time.

A terminal according to another embodiment may receive at least one of state information of each of a plurality of electronic devices, pieces of sensor data obtained from the plurality of electronic devices, the message information 300, call information, or outdoor space information.

The terminal may determine time based on a user input, wherein the time includes at least one of the first time point 211 which is a reference time point, the second time point 212 before the reference time point, or the third time point 213 after the reference time point.

The terminal may visualize and output, to the virtual space, at least one of the state information, the message information 300, the call information, an avatar (110 of FIG. 1; or 550 of FIG. 5), indoor space information, or the outdoor space information 160, which correspond to the determined time.

FIG. 9 is a block diagram of an electronic device in a network environment according to various embodiments.

FIG. 9 is a block diagram illustrating the electronic device 901 in a network environment 900 according to various embodiments. Referring to FIG. 9, the electronic device 901 in the network environment 900 may communicate with an electronic device 902 via a first network 998 (e.g., a short-range wireless communication network), or communicate with at least one of an electronic device 904 or a server 908 via a second network 999 (e.g., a long-range wireless communication network). According to an embodiment, the electronic device 901 may communicate with the electronic device 904 via the server 908. According to an embodiment, the electronic device 901 may include a processor 920, a memory 930, an input module 950, a sound output module 955, a display module 960, an audio module 970, and a sensor module 976, an interface 977, a connecting terminal 978, a haptic module 979, a camera module 980, a power management module 988, a battery 989, a communication module 990, a subscriber identification module (SIM) 996, or an antenna module 997. In some embodiments, at least one of the components (e.g., the connecting terminal 978) may be omitted from the electronic device 901, or one or more of other components may be added to the electronic device 901. In some embodiments, some of the components (e.g., the sensor module 976, the camera module 980, or the antenna module 997) may be integrated as a single component (e.g., the display module 960).

The processor 920 may execute, for example, software (e.g., a program 940) to control at least one other component (e.g., a hardware or software component) of the electronic device 901 connected to the processor 920, and may perform various data processing or computation. According to an embodiment, as at least a part of data processing or computation, the processor 920 may store a command or data received from another component (e.g., the sensor module 976 or the communication module 990) in a volatile memory 932, process the command or the data stored in the volatile memory 932, and store resulting data in a non-volatile memory 934. According to an embodiment, the processor 920 may include a main processor 921 (e.g., a central processing unit (CPU) or an application processor (AP)), or an auxiliary processor 923 (e.g., a graphics processing unit (GPU), a neural processing unit (NPU), an image signal processor (ISP), a sensor hub processor, or a communication processor (CP)) that is operable independently from, or in conjunction with the main processor 921. For example, when the electronic device 901 includes the main processor 921 and the auxiliary processor 923, the auxiliary processor 923 may be adapted to consume less power than the main processor 921 or to be specific to a specified function. The auxiliary processor 923 may be implemented separately from the main processor 921 or as a portion of the main processor 921.

The auxiliary processor 923 may control at least some of functions or states related to at least one (e.g., the display module 960, the sensor module 976, or the communication module 990) of the components of the electronic device 901, instead of the main processor 921 while the main processor 921 is in an inactive (e.g., sleep) state, or together with the main processor 921 while the main processor 921 is in an active state (e.g., executing an application). According to an embodiment, the auxiliary processor 923 (e.g., an ISP or a CP) may be implemented as a portion of another component (e.g., the camera module 980 or the communication module 990) that is functionally related to the auxiliary processor 923. According to an embodiment, the auxiliary processor 923 (e.g., an NPU) may include a hardware structure specified for artificial intelligence (AI) model processing. An AI model may be generated by machine learning. Such learning may be performed by, for example, the electronic device 901 in which AI is performed, or performed via a separate server (e.g., the server 908). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

The memory 930 may store various pieces of data used by at least one component (e.g., the processor 920 or the sensor module 976) of the electronic device 901. The various data may include, for example, software (e.g., the program 940) and input data or output data for a command related thereto. The memory 930 may include the volatile memory 932 or the non-volatile memory 934.

The program 940 may be stored as software in the memory 930, and may include, for example, an operating system (OS) 942, middleware 944, or an application 946.

The input module 950 may receive a command or data to be used by another component (e.g., the processor 920) of the electronic device 901, from the outside (e.g., a user) of the electronic device 901. The input module 950 may include, for example, a microphone, a mouse, a keyboard, a key (e.g., a button), or a digital pen (e.g., a stylus pen).

The sound output module 955 may output a sound signal to the outside of the electronic device 901. The sound output module 955 may include, for example, a speaker or a receiver. The speaker may be used for general purposes, such as playing multimedia or playing record. The receiver may be used to receive an incoming call. According to an embodiment, the receiver may be implemented separately from the speaker or as a part of the speaker.

The display module 960 may visually provide information to the outside (e.g., a user) of the electronic device 901. The display module 960 may include, for example, a display, a hologram device, or a projector and control circuitry to control a corresponding one of the display, the hologram device, and the projector. According to an embodiment, the display module 960 may include a touch sensor adapted to detect a touch, or a pressure sensor adapted to measure the intensity of force incurred by the touch.

The audio module 970 may convert a sound into an electric signal or vice versa. According to an embodiment, the audio module 970 may obtain the sound via the input module 950 or output the sound via the sound output module 955 or an extemal electronic device (e.g., the electronic device 902 such as a speaker or a headphone) directly or wirelessly connected to the electronic device 901.

The sensor module 976 may detect an operational state (e.g., power or temperature) of the electronic device 901 or an environmental state (e.g., a state of a user) external to the electronic device 901, and generate an electrical signal or data value corresponding to the detected state. According to an embodiment, the sensor module 976 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 977 may support one or more of specified protocols to be used for the electronic device 901 to be coupled with the external electronic device (e.g., the electronic device 902) directly (e.g., wired) or wirelessly. According to an embodiment, the interface 977 may include, for example, a high-definition multimedia interface (HDMI), a universal serial bus (USB) interface, a secure digital (SD) card interface, or an audio interface.

The connecting terminal 978 may include a connector via which the electronic device 901 may be physically connected to an extemal electronic device (e.g., the electronic device 902). According to an embodiment, the connecting terminal 978 may include, for example, an HDMI connector, a USB connector, an SD card connector, or an audio connector (e.g., a headphone connector).

The haptic module 979 may convert an electric signal into a mechanical stimulus (e.g., a vibration or a movement) or an electrical stimulus which may be recognized by a user via his or her tactile sensation or kinesthetic sensation. According to an embodiment, the haptic module 979 may include, for example, a motor, a piezoelectric element, or an electric stimulator.

The camera module 980 may capture a still image and moving images. According to an embodiment, the camera module 980 may include one or more lenses, image sensors, image signal processors, or flashes.

The power management module 988 may manage power supplied to the electronic device 901. According to an embodiment, the power management module 988 may be implemented as, for example, at least part of a power management integrated circuit (PMIC).

The battery 989 may supply power to at least one component of the electronic device 901. According to an embodiment, the battery 989 may include, for example, a primary cell which is not rechargeable, a secondary cell which is rechargeable, or a fuel cell.

The communication module 990 may support establishing a direct (e.g., wired) communication channel or a wireless communication channel between the electronic device 901 and the external electronic device (e.g., the electronic device 902, the electronic device 904, or the server 908) and performing communication via the established communication channel. The communication module 990 may include one or more of communication processors that are operable independently of the processor 920 (e.g., an AP) and that support a direct (e.g., wired) communication or a wireless communication. According to an embodiment, the communication module 990 may include a wireless communication module 992 (e.g., a cellular communication module, a short-range wireless communication module, or a global navigation satellite system (GNSS) communication module) or a wired communication module 994 (e.g., a local area network (LAN) communication module, or a power line communication (PLC) module). A corresponding one of these communication modules may communicate with the external electronic device 904 via the first network 998 (e.g., a short-range communication network, such as Bluetooth^{™}, wireless-fidelity (Wi-Fi) direct, or infrared data association (IrDA)) or the second network 999 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multi components (e.g., multiple chips) separate from each other. The wireless communication module 992 may identify and authenticate the electronic device 901 in a communication network, such as the first network 998 or the second network 999, using subscriber information (e.g., international mobile subscriber identity (IMSI)) stored in the SIM 996.

The wireless communication module 992 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 992 may support a high-frequency band (e.g., a mmWave band) to achieve, e.g., a high data transmission rate. The wireless communication module 992 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 992 may support various requirements specified in the electronic device 901, an extemal electronic device (e.g., the electronic device 904), or a network system (e.g., the second network 999). According to an embodiment, the wireless communication module 992 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 997 may transmit or receive a signal or power to or from the outside (e.g., the extemal electronic device) of the electronic device 901. According to an embodiment, the antenna module 997 may include an antenna including a radiating element including a conductive material or a conductive pattern formed in or on a substrate (e.g., a printed circuit board (PCB)). According to an embodiment, the antenna module 997 may include a plurality of antennas (e.g., array antennas). In such a case, at least one antenna appropriate for a communication scheme used in a communication network, such as the first network 998 or the second network 999, may be selected by, for example, the communication module 990 from the plurality of antennas. The signal or the power may be transmitted or received between the communication module 990 and the extemal electronic device via the at least one selected antenna. According to an embodiment, another component (e.g., a radio frequency integrated circuit (RFIC)) other than the radiating element may be additionally formed as a part of the antenna module 997.

According to various embodiments, the antenna module 997 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 901 and the external electronic device 904 via the server 908 coupled with the second network 999. Each of the external electronic devices 902 and 904 may be a device of the same type as or a different type from the electronic device 901. According to an embodiment, all or some of operations to be executed by the electronic device 901 may be executed at one or more of extemal electronic devices (e.g., the extemal devices 902 and 904, and the server 908). For example, if the electronic device 901 needs to perform a function or a service automatically, or in response to a request from a user or another device, the electronic device 901, instead of, or in addition to, executing the function or the service, may request one or more of extemal electronic devices to perform at least part of the function or the service. The one or more extemal electronic devices receiving the request may perform the at least part of the function or the service requested, or an additional function or an additional service related to the request, and transfer an outcome of the performing to the electronic device 901. The electronic device 901 may provide the outcome, with or without further processing of the outcome, as at least part of a reply to the request. To that end, a cloud computing, distributed computing, mobile edge computing (MEC), or client-server computing technology may be used, for example. The electronic device 901 may provide ultra low-latency services using, e.g., distributed computing or mobile edge computing. In another embodiment, the external electronic device 904 may include an Intemet-of-things (IoT) device. The server 908 may be an intelligent server using machine learning and/or a neural network. According to an embodiment, the extemal electronic device 904 or the server 908 may be included in the second network 999. The electronic device 901 may be applied to intelligent services (e.g., a smart home, a smart city, a smart car, or healthcare) based on 5G communication technology or IoT-related technology.

The electronic device according to embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic device is not limited to those described above.

It should be appreciated that embodiments of the disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B," "at least one of A and B," "at least one of A or B," "A, B or C," "at least one of A, B and C," and "at least one of A, B, or C," each of which may include any one of the items listed together in the corresponding one of the phrases, or all possible combinations thereof. Terms, such as "first" or "second", are simply used to distinguish a component from another component and do not limit the components in other aspects (e.g., importance or sequence). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., by wire), wirelessly, or via a third element.

As used in connection with embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 940) including one or more instructions that are stored in a storage medium (e.g., internal memory 936 or external memory 938) that is readable by a machine (e.g., the electronic device 901). For example, a processor (e.g., the processor 920) of the machine (e.g., the electronic device 901) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device configured to:
receive at least one of state information of each of at least one electronic device, pieces of sensor data obtained from the electronic device, message information 300, call information, or outdoor space information;
determine time based on a user input, wherein the time comprises at least one of a first time point 211 which is a reference time point, a second time point 212 before the reference time point, or a third time point 213 after the reference time point; and
visualize and output, to a virtual space, at least one of the state information, the message information 300, the call information, an avatar (110 of FIG. 1; or 550 of FIG. 5), indoor space information, or the outdoor space information 160, which correspond to the determined time.

2. The electronic device of claim 1, comprising:
updating at least one of the message information 300, the call information, user state information 510, or the state information based on whether an event has occurred; and
updating at least one of user biometric information 530, the indoor space information, or the outdoor space information 160 at predetermined intervals.

3. The electronic device of claim 1 or 2, further comprising:
visualizing and displaying, in the virtual space, an object 320 corresponding to the message information 300 comprising at least one of parcel information, financial transaction information, or advertisement information, and first text information 310 comprising at least a partial content of the message information.

4. The electronic device of claims 1 to 3, further comprising:
based on a comparison between the message information 300 and a predetermined event list, when a content included in the message information is an event included in the predetermined event list, displaying a visual effect 330 corresponding to the event on an object corresponding to the event.

5. The electronic device of claims 1 to 4, further comprising:
when a user input of an object 320 corresponding to the event is received, visualizing and displaying, in the virtual space, second text information 340 of the message information 300.

6. The electronic device of claims 1 to 5, further comprising:
generating an outdoor space 130 that is distinguished from an indoor space based on the outdoor space information 160; and
displaying the generated outdoor space 130 in the virtual space.

7. The electronic device of claims 1 to 6, further comprising:
visualizing and displaying, based on a point of view of the avatar, the outdoor space information 160 corresponding to at least one of the first time point 211, the second time point 212, or the third time point 213 based on the user input; and
generating the outdoor space 130 based on the outdoor space information 160,
wherein the user input comprises at least one of an input of selecting a window 120 which is a boundary between an outdoor space and an indoor space in the virtual space, or an input of manipulating the avatar (110 of FIG. 1; or 550 of FIG. 5) to position the avatar within a predetermined distance from the window 120.

8. The electronic device of claims 1 to 7, further comprising:
when the determined time is the third time point 213, determining at least one of the state information or the avatar corresponding to the third time point 213 based on user pattern information.

9. The electronic device of claims 1 to 8, wherein
the state information corresponding to the third time point is determined based on user pattern information of the at least one electronic device of a user included in the user pattern information, and
the avatar corresponding to the third time point is determined based on activity pattern information of the user included in the user pattern information.

10. The electronic device of claims 1 to 9, further comprising:
displaying schedule information on a calendar displayed in the virtual space based on the schedule information.

11. The electronic device of claims 1 to 10, wherein the avatar (110 of FIG. 1; or 550 of FIG. 5) is generated in the virtual space based on at least one of user state information 510 or user biometric information 530.

12. The electronic device of claims 1 to 11, wherein
the state information of each of the at least one electronic device comprises at least one of an operating state, an operation mode, power usage, or position information of each of the at least one electronic device,
the indoor space information comprises at least one of the indoor temperature, an indoor-outdoor temperature difference, an indoor fine dust concentration, or indoor humidity, and
the outdoor space information 160 comprises at least one of an outdoor temperature, the indoor-outdoor temperature difference, a sensible temperature, an outdoor fine dust concentration, outdoor humidity, precipitation, rainfall, fog, an atmospheric pressure, wind information, visibility, or cloud information.

13. The electronic device of claims 1 to 12, further comprising:
based on a user input among a plurality of electronic devices displayed in the virtual space, controlling at least one of the plurality of electronic devices.

14. A server for displaying pieces of information received from at least one electronic device in a virtual space, the server configured to:
receive at least one of state information of each of the at least one electronic device, pieces of sensor data obtained from the electronic device, message information 300, call information, or outdoor space information 160;
determine time based on a user input, wherein the time comprises at least one of a first time point 211 which is a reference time point, a second time point 212 before the reference time point, or a third time point 213 after the reference time point; and
visualize and output, to the virtual space, at least one of the state information, the message information 300, the call information, an avatar (110 of FIG. 1; or 550 of FIG. 5), indoor space information, or the outdoor space information 160, which correspond to the determined time.

15. A method of displaying pieces of information received from at least one electronic device in a virtual space, the method comprising:
receiving at least one of state information of each of the at least one electronic device, pieces of sensor data obtained from the plurality of electronic devices, message information 300, call information, or outdoor space information 160;
determining time based on a user input, wherein the time comprises at least one of a first time point 211 which is a reference time point, a second time point 212 before the reference time point, or a third time point 213 after the reference time point; and
visualizing and outputting, to the virtual space, at least one of the state information, the message information 300, the call information, an avatar (110 of FIG. 1; or 550 of FIG. 5), indoor space information, or the outdoor space information 160, which correspond to the determined time.
